# EUROPEAN PATENT APPLICATION

(11) **EP 3 742 365 A1**
(43) Date of publication of application: **25.11.2020**
(21) Application number: 19216717.9
(22) Date of filing: 16.12.2019
(51) Int. Cl.: G06Q 10/08

(54) **METHOD OF AUTOMATICALLY MANAGING REMAINING CAPACITIES OF BEAUTY PRODUCTS**

(30) Priority: 24.05.2019 TW 108118046
(71) Applicant: CAL-COMP BIG DATA, INC, Shenkeng, New Taipei City 222 (TW)
(72) Inventor: HUANG, Yuan-Peng, 222 NEW TAIPEI CITY (TW)
(74) Representative: 2K Patentanwälte Blasberg Kewitz & Reichel

(57) **Abstract**

A method of automatically managing remaining capacities of beauty products is provided. The method is applied to a system of managing beauty products and has the following steps: recognizing a beauty product (4) being used by a user under a record mode; weighing the beauty product (4) after the user finishes using the beauty product (4) for obtaining a weight after usage; recording the usage of the beauty product (4) in this round and updating a remaining volume of the beauty product (4); and outputting a reminder of upcoming run out of beauty product when determining that the remaining volume of any beauty product (4) is less than a default sufficient volume.

## Description

### BACKGROUND OF THE INVENTION

### FIELD OF THE INVENTION

The technical field relates to beauty products and more particularly related to a method of automatically managing remaining capacities of beauty products.

### DESCRIPTION OF RELATED ART

With the increase of beauty knowledge, people know that alternately using the multiple types of beauty products can maximize the effect of beauty, and no longer be limited to using single beauty product.

In general, people usually buy a plurality of different beauty products for alternate usage. However, because of the number of beauty products owned by the user is too many to remember the remaining capacities of all of the beauty products. This makes it usually happen that the user finds that the beauty product is run out during the beauty process and is unable to continue to finish the beauty process.

Accordingly, there is currently a need for a schema of automatically recording the usage of each beauty product caused by the user and actively reminding the user before any beauty product is run out.

### SUMMARY OF THE INVENTION

The disclosure is directed to a method of automatically managing remaining capacities of beauty products having the ability to automatically recognize the beauty product currently used, and update and monitor a remaining volume of the beauty product.

One of the exemplary embodiments, a method of automatically managing remaining capacities of beauty products is applied to a system of managing beauty products, the system of managing beauty products comprises a recognition module, a display module, a processing module and a weighing module, and the method of automatically managing remaining capacities of beauty products comprises following steps: a) controlling the processing module to recognize a beauty product being used by a user via a recognition module under a record mode; b) weighing the beauty product via a weighing module when the user finishes using the beauty product for obtaining a weight after usage of the beauty product; c) recording usage of the beauty product in this round and updating a remaining volume of the beauty product according to the weight after usage; d) outputting a reminder of upcoming run out of beauty product via a display module when determining that the remaining volume of the beauty product is less than a default sufficient volume.

The present disclosed example can update the remaining volume of each beauty product automatically, and actively remind the user of preparing spare of the beauty product before the beauty product runs out.

### BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
FIG. 1 is an architecture diagram of a system of managing beauty products according to one embodiment of the present disclosed example;
FIG. 2A is a usage schematic view of a beauty product management apparatus according to one embodiment of the present disclosed example;
FIG. 2B is a usage schematic view of a beauty product management apparatus according to one embodiment of the present disclosed example;
FIG. 3 is a flowchart of a method of automatically managing remaining capacities of beauty products according to a first embodiment of the present disclosed example;
FIG. 4 is a flowchart of management mode according to a second embodiment of the present disclosed example; and
FIG. 5 is a flowchart of a monitoring procedure according to a third embodiment of the present disclosed example.

### DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims is all covered by the claims claimed by the present disclosed example.

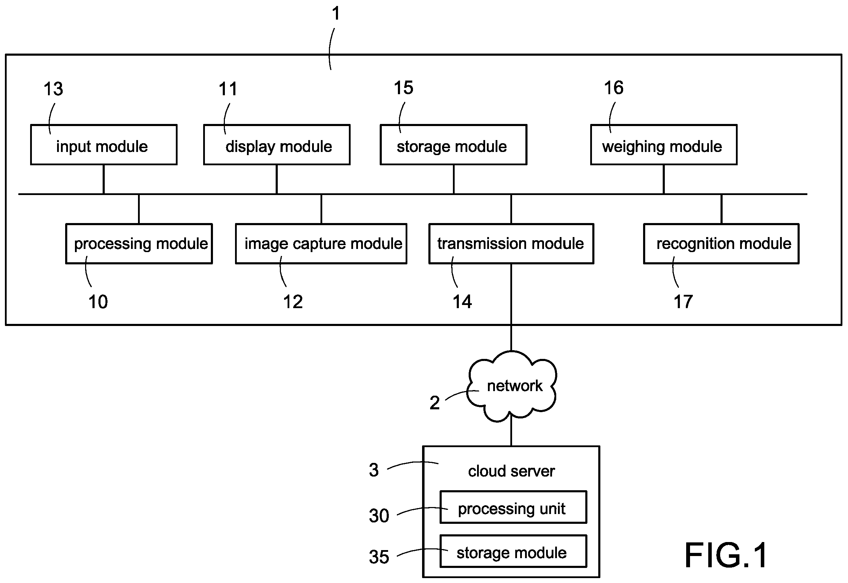

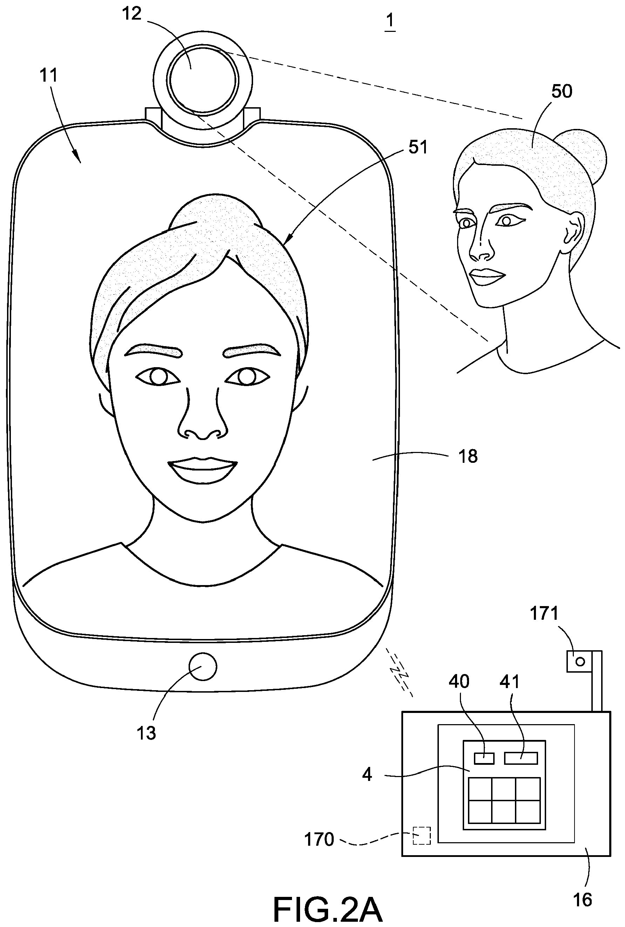

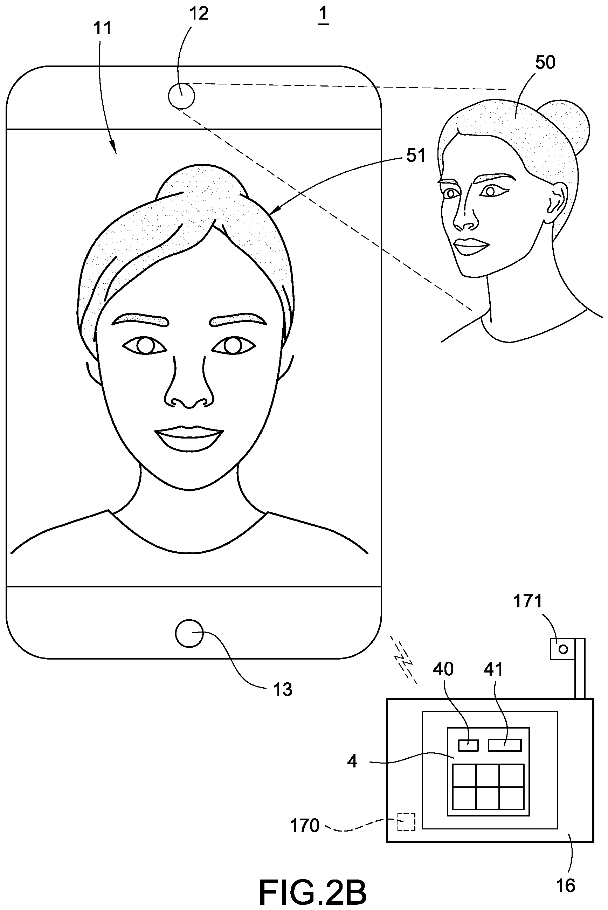

Please refer to FIG. 1, FIG. 2A and FIG. 2B. FIG. 1 is an architecture diagram of a system of managing beauty products according to one embodiment of the present disclosed example, FIG. 2A is a usage schematic view of a beauty product management apparatus according to one embodiment of the present disclosed example, and FIG. 2B is a usage schematic view of a beauty product management apparatus according to one embodiment of the present disclosed example.

A system of managing beauty products is disclosed by the present disclosed example. The system of managing beauty products is mainly used to execute a method of automatically managing remaining capacities of beauty products (hereinafter referred to as automatic management method), and the method has the ability to recognize each beauty product used by the user automatically during beauty procedure and update the remaining volume of each beauty product after the usage of each beauty product. Moreover, the automatic management method may actively remind the user when any beauty product is about to be run out.

As shown in FIG. 1, the system of managing beauty products of the present disclosed example may comprise a beauty product management apparatus 1. The beauty product management apparatus 1 may comprise a processing module 10, a display module 11, an image capture module 12, an input module 13, a transmission module 14, a storage module 15, a weighing module 16 and a recognition module 17. The processing module 10, the display module 11, the image capture module 12, the input module 13, the transmission module 14, and the storage module 15 may be electrically connected to each other by buses.

One of the exemplary embodiments, as shown in FIG. 1, the weighing module 16 and the recognition module 17 may be electrically connected to the other modules by buses.

One of the exemplary embodiments, as shown in FIG. 2A or FIG. 2B, the weighing module 16 and the recognition module 17 may be connected to the transmission module 14 in a way of wireless for connecting to the other modules, but this specific example is not intended to limit the scope of the present disclosed example.

One of the exemplary embodiments, the weighing module 16 and the recognition module 17 may be connected to the transmission module 14 in wire.

The display module (such as color LCD monitor) 11 is used to display information. The image capture module 12 (such as camera) is used to capture the external images. The input module 13 (such as buttons or touch pad) is used to receive the user operation. The transmission module 14 (such as Wi-Fi module, Bluetooth module, mobile network module or the other wireless transmission modules, or USB module, Ethernet module or the other wired transmission modules) is used to connect to the network. The storage module 15 is used to store data. The weighing module 16 is used to weigh the weight of an object, such as the weight of beauty product. The recognition module 17 (such as RFID reader or camera) is used to recognize the object be weighed, such as recognition of the beauty product which the user would like to weigh. The processing module 10 is used to control each module of the beauty product management apparatus 1 to operate.

One of the exemplary embodiments, the storage module 15 may comprise a non-transient storage media, the non-transient storage media stores a computer program (such as firmware, operating system, application program or a combination of the above programs of the beauty product management apparatus 1), the computer program records a plurality of corresponding computer-executable codes. The processing unit 10 may further implement the method of each embodiment of the present disclosed example via the execution of the computer-executable codes.

One of the exemplary embodiments, the automatic management method of each embodiment of the present disclosed example is implemented in the local end. Namely, each embodiment of the present disclosed example may be implemented by the beauty product management apparatus 1 completely, but this specific example is not intended to limit the scope of the present disclosed example.

One of the exemplary embodiments, the automatic management method of each embodiment of the present disclosed example may be implemented by combining with the cloud computing technology. More specifically, the transmission module 14 of the beauty product management apparatus 1 may be connected to the cloud server 3 via network 2, and the cloud server 3 comprises a processing module 30 and a storage module 35. The automatic management method of each embodiment of the present disclosed example may be implemented by making the cloud server 3 interact with the beauty product management apparatus 1.

One of the exemplary embodiments, the beauty product management apparatus 1 may appear a mirror image of the user, so as to be used as a beauty mirror. Moreover, the beauty product management apparatus 1 may update the remaining capacities of the beauty products after usage of the beauty products.

One of the exemplary embodiments, as shown in FIG. 2 the beauty product management apparatus 1 may be a smart mirror, and have the ability to provide the functions of optical mirror and electronic mirror simultaneously. More specifically, the beauty product management apparatus 1 may further comprise a mirror glass 18 (such as unidirectional glass) and a case. The mirror glass 18 is used for appearing an optical image 51 of the user 50 in reflection to implement the function of optical mirror. Above modules 10-15 may be arranged in the case of the beauty product management apparatus 1.

Furthermore, the display module 11 is arranged in the case and on the rear of the mirror glass 18. Namely, the user doesn't have the ability to discover the existence of the display module 11 directly by watching the appearance. Moreover, the display module 11 may display information on the mirror glass 18 by transmission after being turned on or the brightness of backlight being increased.

Furthermore, the processing unit 10 may control the display module 11 to display the additional information (such as weather information, date information, graphical user interface or the other information) in the designated region, such as the edge of the mirror glass 18 or the other region having a lower probability of overlapping the optical mirror image 51.

Furthermore, the image capture module 12 may be arranged upon the mirror glass 18. The input module 13 may comprise at least one physical button arranged on the front side of the beauty product management apparatus 1, but this specific example is not intended to limit the scope of the present disclosed example.

Please be noted that although the image capture module 12 is arranged upon the mirror glass 18 in this embodiment, but this specific example is not intended to limit the scope of the present disclosed example. The image capture module 12 may be arranged in any position of the beauty product management apparatus 1 according to the product demand, such as being arranged behind the mirror glass 18 for reducing the probability of the image capture module 12 being destroyed and making the appearance simple.

One of the exemplary embodiments, as shown in FIG. 2B, the beauty product management apparatus 1 may be a general computer device (such as a smartphone, a tablet, or an electronic signboard with a camera function, take smartphone for example in FIG 2B), and only have the ability to provide a function of electronic mirror.

More specifically, above modules 10-15 are installed on inside of the case of the beauty product management apparatus 1, the image capture module 12 and the display module 11 may be installed on the same side of the beauty product management apparatus 1, so as to make the user have the ability to be captured and watch the display module 11 simultaneously. In addition, the beauty product management apparatus 1 may continuously capture images of the area in front of the beauty product management apparatus 1 (such as a facial image of the user) by the image capture module 12 when the execution of the computer program (such as the application program), execute the selectable process(es) on the captured images optionally (such as the mirroring flip process or the brightness-adjusting process and so on), and display the captured (processed) images by the display module 11 instantly. Thus, the user 50 may watch his/her electronic mirror image 51 on the display module 11.

One of the exemplary embodiments, as shown in FIGS. 2A and 2B, the weighing module 16 may be a weight scale with a weighing platform. The recognition module 17 may be a RFID reader 170 or a camera 171, and be arranged on the weighing module 16 for recognizing the beauty product 4 being weighed. There are the different RFID tags 40 or the different sets of barcodes 41 respectively attached on the different beauty products 4. For example, the user may stick the RFID tag being set on the beauty product 4. The different sets of barcodes 41 may be a commodity barcode of the beauty product 4 or a set of barcodes made by the user. Then, the user may place each beauty product 4 on the weighing platform after the usage of the beauty product 4 during the execution of beauty. The beauty product management apparatus 1 may induct the RFID tag 40 of each beauty product 4 by the RFID reader 170 for obtaining and analyzing the identification information stored in the RFID tag 40 to recognize the beauty product 4. Or the beauty product management apparatus 1 may capture by the camera 171 the image of the barcode 41 of the beauty product 4 for recognizing the beauty product 4 according to the identification information embedded in the barcode 41 or the appearance image of the beauty product 4 for recognizing the beauty product 4 according to the appearance features. In the same time, the beauty product management apparatus 1 may take the weight of the beauty product 4 (namely the weight after usage described later) by the weighing module 16.

One of the exemplary embodiments, if the recognition module 17 is a camera, the recognition module 17 and the image capture module 12 may be the same module (namely, the single module with at least two functions), so as to reduce the cost. Moreover, after the user completes the usage of any beauty product, the user may move the used beauty product 4 to front of the image capture module 12 for capturing and recognition, and then put the used beauty product 4 on the weighing platform for weighing.

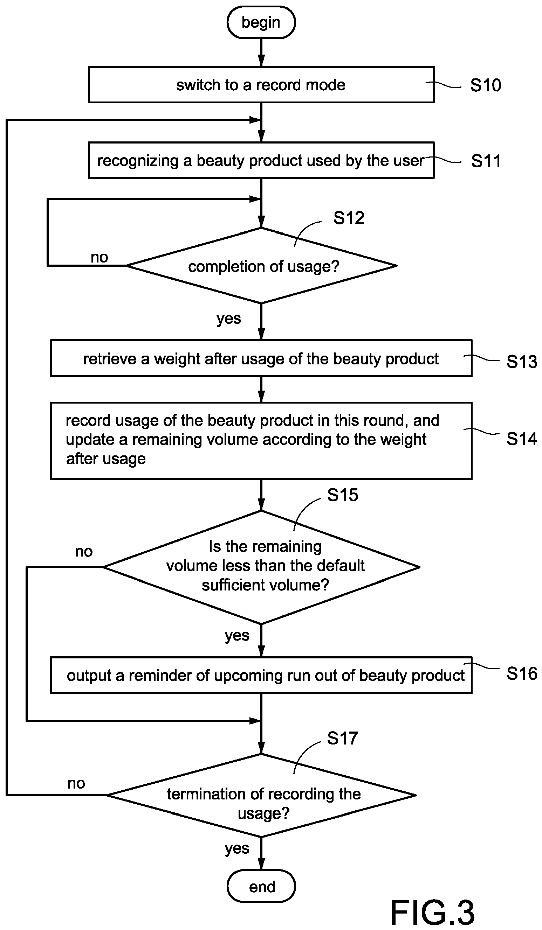

Please refer to FIG. 3, which is a flowchart of a method of automatically managing remaining capacities of beauty products according to a first embodiment of the present disclosed example. The method of automatically managing remaining capacities of beauty products of each embodiment of the present disclosed example may be implemented by the beauty product management apparatus 1 shown in FIG. 1, FIG. 2A and FIG. 2B. The method of automatically managing remaining capacities of beauty products mainly comprises following steps.

Step S10: the processing module 10 controls the beauty product management apparatus 1 to switch to a record mode. More specifically, when the user would like to start to execute beauty, the user may operate the beauty product management apparatus 1 to switch to the record mode, or the beauty product management apparatus 1 may switch to the record mode automatically by automatic detection. In addition, under the record mode, the processing module 10 may control the beauty product management apparatus 1 to execute the steps S11-S17 of automatically recording and reminding described later.

One of the exemplary embodiments, the user may input a start beauty operation (such as pressing a record button of the input module 13) a start beauty voice (such as the user speaking a voice "start beauty" if the input module 13 is a microphone) by the input module 13, or pose a start beauty gesture (such as the "1" gesture) to make the image capture module 12 capture the start beauty gesture. Then, the processing module 10 controls the beauty product management apparatus 1 to switch to the record mode when detecting above designated input.

Step S11: the processing module 10 recognizes the beauty product used by the user by the recognition module 17.

One of the exemplary embodiments, each RFID tag may be attached to each of the beauty products in advance if the recognition module 17 is an RFID reader. Above RFID tag stores the identification information of the attached beauty product. The processing module 10 may determine that this beauty product had been used by the user when the RFID tag of the beauty product is detected by the RFID reader, receive the input information from the RFID tag (the input information comprises the identification information of the beauty product being used), and recognize the beauty product according to the identification information.

One of the exemplary embodiments, if the recognition module 17 is a camera, the processing module 10 may continuously capture images by the camera, determine that the beauty product had been used by the user when recognizing according to the captured images that any of the beauty products is placed on the weighing module, recognize the appearance input features (such as shape, color or the other appearance features) of the beauty product in the captured images, and recognizing the identity of beauty product according to the appearance input features.

One of the exemplary embodiments, the processing module 10 recognizes the barcode image of the beauty product in the captured images, generates the input information by decoding the barcode according to the recognized barcode image, and recognizes the identity of the beauty product according to the input information.

One of the exemplary embodiments, the user may build a beauty cabinet list in the beauty product management apparatus 1 in advance, and above beauty cabinet list records the beauty products owned by the user and their information, such as the appearance recognition features (shape, color or the other appearance features) or identification information. The processing module 10 is set to compare the input information/the appearance input features retrieved by the recognition module 17 with the information of each of the beauty product listed in the beauty cabinet list for determining what the beauty product used by the user is. For example, compare the input information with the identification information, or compare the appearance input feature with the appearance recognition features.

Step S12: the processing module 10 determines whether the user finishes the usage of this beauty product.

If the processing module 10 determines that the user finishes the usage of this beauty product, the step S13 is going to be performed by the processing module 10. Otherwise, the processing module 10 performs the step S12 for continuous detection.

Step S13: the processing module 10 retrieves the weight after usage of beauty product by the weighing module 16.

One of the exemplary embodiments, after the user finishes the usage of this beauty product, the user may put this beauty product on the weighing module 16. At this time, the processing module 10 may sense the existence of the beauty product by the weighing module 16 and/or recognition module 17, determine that the user finishes the usage of this beauty product, and measure a weight of this beauty product for obtaining the weight after usage of this beauty product.

Step S14: the processing module 10 records the usage in this round of this beauty product, and updates the remaining volume of this beauty product according to the weight after usage.

One of the exemplary embodiments, the processing module 10 records the usage timing of this beauty product (such as before going out, after going home or before going to bed) or the usage order between this beauty product and the other beauty product(s), compute and record the single time quantity consumed in this round of this beauty product.

One of the exemplary embodiments, the processing module 10 firstly retrieves the weight before usage (the weight before usage may be the weight after usage of the last round of beauty procedure or a weight obtained by measuring the beauty product before the execution of beauty procedure), and compute the single time quantity of this beauty product according to the weight before usage and the weight after usage. Then, the processing module 10 deducts the single time quantity used in this round from the weight before usage (such as the weight after usage of the last round to obtain a result as the remaining volume in this round.

One of the exemplary embodiments, the remaining volume may be expressed by the unit which is easier to understand, such as available times or available volume. The storage module 15 may store the conversion rule(s) of each beauty product, and the processing module 10 may converse the weight after usage of each of the beauty products into the remaining volume of each of the beauty products according to the conversion rules.

One of the exemplary embodiments, the processing module 10 is to firstly retrieve a package weight (such as a weight of the container) of the beauty product, and then compute a result of the weight after usage minus package weight as the remaining volume.

Thus, the present disclosed example can update the remaining volume of each beauty product automatically.

Step S15: the processing module 10 determines whether the remaining volume of any of the beauty products is less than a default sufficient volume.

One of the exemplary embodiments, a value of above default sufficient volume is greater than zero, and the amount of the above default sufficient volume is not less than a basic volume of the user executing one or more round(s) of beauty procedure.

For example, if the basic volume of the beauty product is 10 milliliters, above default sufficient volume may be set as 10 or more milliliters.

In another example, if the basic volume of the beauty product is 5 grams, above default sufficient volume may be set as 5 or more grams.

If the processing module 10 determines that the remaining volume of any beauty product is less than the default sufficient volume, the processing module 10 performs step S16. Otherwise, the processing module 10 performs step S17.

Step S16: the processing module 10 outputs a reminder of upcoming run out of beauty product by the display module 11 for reminding the user that the beauty product is going to run out.

Thus, the user can prepare a spare of the beauty product before the beauty product runs out.

Step S17: the processing module 10 determines whether the beauty product management apparatus 1 is controlled to leave the record mode. More specifically, when the user would like to finish the beauty procedure, the user may operate the beauty product management apparatus 1 to leave (or the beauty product management apparatus 1 leaves automatically by detection) the record mode for stopping recording the beauty procedure.

One of the exemplary embodiments, the user may input a stop beauty operation (such as pressing the record button of the input module 13 again) or a stop beauty voice (such as the user speaking a voice "stop beauty"), or pose a stop beauty gesture (such as the "5" gesture) to make the image capture module 12 capture the stop beauty gesture. Then, the processing module 10 controls the beauty product management apparatus 1 to leave from the record mode when detecting above designated input.

If the processing module 10 determines that the beauty product management apparatus leaves the record mode, the processing module 10 finishes the method of automatically managing remaining capacities of beauty products. Otherwise, the processing module 10 perform the step S11 again for recording and managing the usage of the next beauty product.

Thus, the present disclosed example can actively recognize and record the usage amount of each beauty product and further manage the beauty product, so as to make the user focus on executing the beauty.

Please be noted that there are a lot of beauty products with non-transparent packages, these non-transparent packages make people be unable to see the current real remaining capacities of the beauty products by vision, such that people are unable to know the remaining volume, and make it usually happen that people find that the beauty product is run out during the beauty process and is unable to continue to finish the beauty process.

The present disclosed example can effectively solve above problem by computing the remaining volume of each beauty product according its weight, and provide the correct remaining volume.

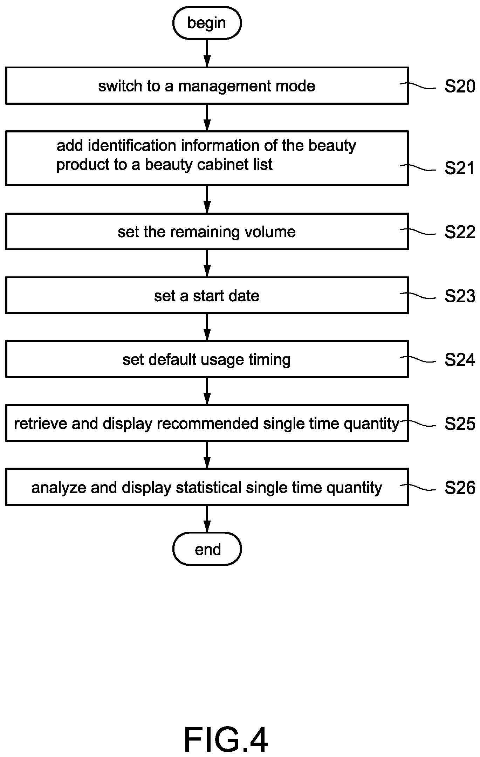

Please refer to FIG. 4, which is a flowchart of management mode according to a second embodiment of the present disclosed example. The method of automatically managing remaining capacities of beauty products of this embodiment further provides a function of managing the beauty cabinet list having the ability to make the user convenient to manage or search the beauty products owned by the user (namely looking up the beauty cabinet list), and add the new beauty product.

Step S20: when the user would like to manage the beauty products owned by the user, the user may operate the beauty product management apparatus 1 (or the beauty product management apparatus automatically switches by detection) to switch to a management mode.

One of the exemplary embodiments, the user may input an operation of entering beauty cabinet (such as pressing a button of entering beauty cabinet or a voice of entering beauty cabinet (such as the user speaking a voice "enter beauty cabinet" if the input module 13 is a microphone) by the input module 13, or pose a gesture of entering beauty cabinet (such as the "O" hand gesture) to make the image capture module 12 capture the gesture. Then, the processing module 10 controls the beauty product management apparatus 1 to switch to the management mode when detecting above designated input.

Moreover, under the management mode, the processing module 10 may control the input module 13 and the display module 11 to interact with the user for making the user be unable to browse the information of all of the beauty products.

Then, when the user would like to add any predefined beauty product, the user may input an operation of adding new beauty product, a voice of adding new beauty product or a gesture of adding new beauty product for making the processing module 10 to perform steps S21-S26 to adding the new predefined beauty product to the beauty cabinet list of the user.

Step S21: the processing module 10 adds identification information of a new beauty product to a beauty cabinet list of the user.

For example, the user may input the identification information (such as name or codes) of the beauty product which the user wants to add by the input module 13.

In another example, the user may control the recognition module 17 to capture (if the recognition module is camera) barcode or appearance of the beauty product for retrieving identification information or appearance recognition feature of the beauty product, or control the recognition module 17 to induct (if the recognition module is an RFID reader) an RFID tag attached on the beauty product for retrieving the identification information of the beauty product. Then the processing module 10 may add the appearance recognition feature or the identification information to the beauty cabinet list of the user.

Step S22: the processing module 10 retrieves an initial volume of the beauty product as the remaining volume.

One of the exemplary embodiments, if the user had used the same type of beauty product in the past, the processing module 10 may retrieve the initial volume of the same type of beauty product as the initial volume of the added beauty product according to the historical usage record.

One of the exemplary embodiments, the processing module may search according to the appearance recognition feature or the identification information in a beauty product database for obtaining the initial volume of the above same type of beauty product. The beauty product database may be a built-in local database or a network database, and store the relative information (such as product name, initial volume, package weight, etc.) of a plurality of beauty products being common in the market.

Step S23: the processing module 10 sets a start date of using the new beauty product.

One of the exemplary embodiments, the processing module 10 sets the date of the current day as the start date of using the new beauty product.

One of the exemplary embodiments, the processing module 10 sets the date of the day which the user uses the beauty product first time as the start date of using the new beauty product.

Step S24: the processing module 10 sets the default usage timing of the new beauty product being added. More specifically, the user may set the default usage timing (such as day, night, before going out, after going home or before going to bed) according to the user operation, the historical usage record about the same user using the same type of beauty product or the information stored in the beauty product database.

Step S25: the processing module 10 retrieves a recommended single time quantity of the same type of beauty product from the beauty product database, set the retrieved recommended single time quantity as the recommended single time quantity of the beauty product being added, and displays the recommended single time quantity by the display module 11.

Step S26: the processing module 10 analyzes a statistical single time quantity according to the historical usage record of the same type of beauty product, and displays the statistical single time quantity on the display module 11.

One of the exemplary embodiments, the processing module 10 computes an average of the single time quantities in multiple rounds as the statistical single time quantity.

Thus, the present disclosed example can make the user be unable to manage his/her beauty products, and assist the user to add the new beauty product quickly.

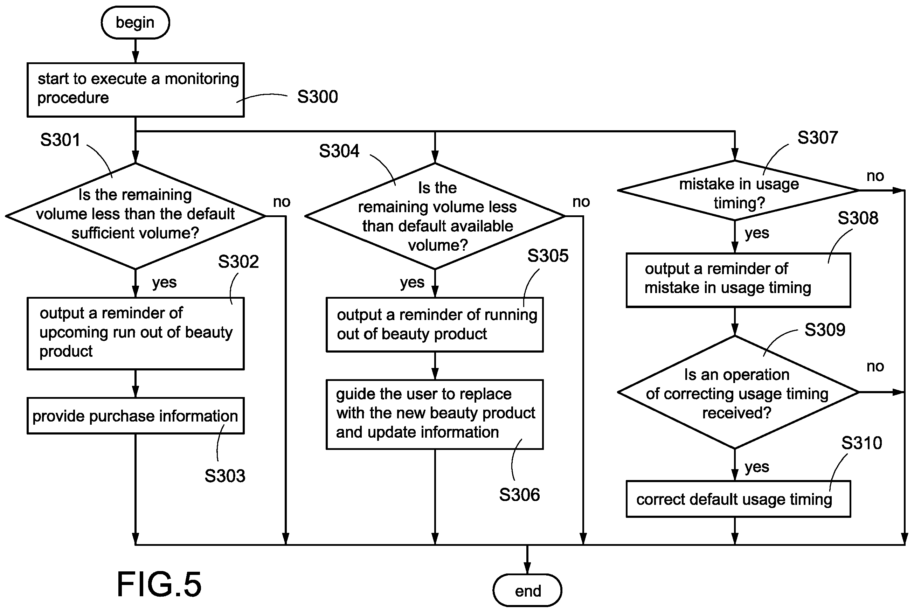

Please refer to FIG. 5, which is a flowchart of a monitoring procedure according to a third embodiment of the present disclosed example. The method of automatically managing remaining capacities of beauty products of this embodiment further provides a function of monitoring having the ability to actively monitor the statuses and usages of all of the beauty products owned by the user by execution of monitoring procedure, and issue the corresponding remind notification when a status of any beauty product is bad (such as being overdue or its remaining volume being too little) or the usage of any beauty product is incorrect (such as the usage of any beauty product does not conform with a default usage of the beauty product).

For example, the reminder (notification) of mistake in usage may be issued when the usage of any beauty product is incorrect, and the reminder (notification) of upcoming expired beauty product or the reminder (notification) of expired beauty product may be issued when the beauty product is upcoming expired or expired.

Please be noted that compare to the method shown in FIG. 3 which monitoring the remaining volume of each beauty product after the usage of each beauty product, the monitoring procedure of this embodiment may be executed anytime, conditionally (such as executing when detecting that the parameter (for example, remaining volume) of the beauty product changed) or periodically (such as once a day). For example, the monitoring procedure may be always executed in the background, or the monitoring procedure may be executed after the beauty product management apparatus 1 is switched to the record mode or the management mode, but this specific example is not intended to limit the scope of the present disclosed example.

Please be noted that although this embodiment takes only monitoring the remaining volume and the usage timing for explaining, but this specific example is not intended to limit the parameters monitored by the monitoring procedure of the present disclosed example.

One of the exemplary embodiments, cooperate with the usage of different devices, the monitoring procedure may further monitor whether the temperature of storing the beauty product(s) is inappropriate (the temperature could be retrieved by a temperature sensor or local weather information), any beauty product is expired, the single time quantity is too less or too much and so on.

The method of automatically managing remaining capacities of beauty products of this embodiment further comprises following monitoring steps.

Step S300: the processing module 10 starts to execute the monitoring procedure. During execution of monitoring procedure, the processing module 10 may perform step S301, S307 and S307 simultaneously or orderly for monitoring the multiple types of parameters.

This embodiment can effectively implement the function of monitoring and keeping sufficient volume. More specifically, the processing module 10 performs step S301: the processing module 10 determining whether the remaining volume of any beauty product is less than a default sufficient volume.

If the processing module 10 determines that the remaining volume of any beauty product is less than the default sufficient volume, the processing module 10 performs step S302. Otherwise, the processing module 10 finishes this detection.

Step S302: the processing module 10 output a reminder of upcoming run out of beauty product on the display module 11 for reminding the user that the beauty product is going to run out.

Step S303: the processing module 10 may provide the purchase information on the display module 11 for making the user convenient to buy the spare quickly.

Above-mentioned purchase information may be set by the user when adding this beauty product, or be obtained by the processing module 10 actively searching (websites or above-mentioned beauty product database), but this specific example is not intended to limit the scope of the present disclosed example. Then, the monitoring of this round is finished.

This embodiment can implement the function of monitoring the available volume. More specifically, the processing module 10 performs step S304: the processing module 10 determining whether the remaining volume of any beauty product is less than the default available volume, above-mentioned default available volume is less than the above-mentioned default sufficient volume.

One of the exemplary embodiments, the value of the above-mentioned default available volume may be zero, or the amount less than the basic volume of the user executing one round of beauty procedure.

If the processing module 10 determines that the available volume of any beauty product is less than the default available volume, the processing module 10 performs step S305. Otherwise, the processing module 10 finishes this detection.

Step S305: the processing module 10 outputs a reminder of running out of beauty product on the display module 11 for reminding the user that the beauty product has been run out.

Step S306: the processing module 10 may interact with the user by the display module 11, the image capture module 12 and/or the input module 13 to guide the user to replace the beauty product having been run out with the spare of the beauty product, or unpack the new beauty products for usage.

For example, the processing module 10 may guide the user to use a supplemental package of the beauty product to supplement the beauty product having been run out.

Furthermore, the processing module 10 may further add the information of the new beauty product to the beauty cabinet list. Then, the monitoring of this round is finished.

This embodiment can implement the function of monitoring the usage timing. More specifically, the processing module 10 performs step S307 during/after the user uses the beauty product: the processing module 10 determining whether there is any mistake in usage timing of any beauty product according to the default usage timing of the beauty product being used, such as the user using the night cream on daytime beauty.

If the processing module 10 determines that there is the mistake in usage timing of the beauty product, the processing module 10 performs step S308. Otherwise, the monitoring to this beauty product is finished (the processing module 10 may continue to monitor the next beauty product).

Step S308: the processing module 10 may output a reminder of mistake in usage timing on the display module 11 for reminding the user that the usage timing of the beauty product is incorrect, and may further provide the correct usage timing of this beauty product to the user.

One of the exemplary embodiments, the present disclosed example further provides a function of correcting the usage timing (steps S309-S310) which can correct the usage timing of this beauty product instantly.

Step S309: the processing module 10 determines whether an operation of correcting usage timing is received.

More specifically, the user may input by the input module 13 an operation of correcting usage timing or a voice of correcting usage timing, or input by the image capture module 12 a gesture of correcting usage timing after watching the reminder of mistake in usage timing. For example, replace the default usage timing with the usage timing of the current default beauty product.

Step S310: the processing module 10 corrects the default usage timing according to the operation of correcting usage timing. Then, the monitoring of this round is finished.

The present disclosed example can make the user be able to correct the usage timing of the user when the system misjudgment happens or the reminder does not meet the user's expectations, so as to improve the user experience.

Please be noted that although the above embodiments take executing the automatic management method in local-end for the explanation, but this specific example is not intended to limit the scope of the present disclosed example.

One of the exemplary embodiments, the present disclosed example executes the automatic recording method by combining with cloud computing technology. More specifically, the beauty product management apparatus 1 in local-end is used to only receive input operations and display information (such as the steps S11-S13, S16-S17 of FIG. 3, the steps S21, S25, S26 of FIG. 4 and/or steps S302-S303, S305-S306, S309-S310 of FIG. 5), all or part of the other steps may be executed by the processing module 30 and storage module 35 of the cloud server 3.

Take the automatic management method shown in FIG. 3 for example, after the system of managing beauty products switches to the record mode (step S10), the beauty product management apparatus 1 may retrieve the input information of the beauty product used by the user, and upload the input information to the cloud server 3 for recognizing the beauty product used by the user (step S11). Then, when the beauty product management apparatus 1 determines that the user finishes the usage of this beauty product (step S12, yes), the beauty product management apparatus retrieves the weight after usage of this beauty product, and uploads the usage record of this round and the weight after usage to the cloud server 3 (step S13). The cloud server 3 may update the usage record and the remaining volume of this beauty product according to the received usage record and weight after usage (step S14). When determining that the remaining volume of any of the beauty products is less than the default sufficient volume (step S15, yes), the cloud server 3 may transmit the corresponding comments (such as a comment of upcoming run out of beauty product) by the network to the beauty product management apparatus 1 for making the beauty product management apparatus 1 output the corresponding notification (step S16), such as a reminder of upcoming run out of beauty product.

Take FIG. 4 for example, after the system of managing beauty products switches to a management mode (step S20), the beauty product management apparatus 1 may retrieve the information of the beauty product added by the user, and uploads the information to the cloud server 3 for making the cloud server 3 add the new beauty product to the beauty cabinet list of the user (step S21). Then, the cloud server 3 may execute step S22-S24 for set the relative information of this beauty product, retrieving the recommended single time quantity of the same type of beauty product or analyzing the statistical single time quantity according to the historical usage record of the same type of beauty product, and returning the recommended single time quantity or the statistical single time quantity to the beauty product management apparatus 1 for displaying. Thus, the user can know the usage of the newly added beauty product.

Take FIG. 5 for example, after the system of managing beauty products starts to execute the monitoring procedure (step S300), the cloud server 3 may monitor the remaining volume of each beauty product (steps S301, S304 and S307) and transmit the corresponding comment to the beauty product management apparatus 1 when any abnormal event happens for displaying the corresponding information on the beauty product management apparatus 1 (steps S302-S303, S305-S306 and S308) or response (steps S309-S310).

## Claims

1. A method of automatically managing remaining capacities of beauty products applied to a system of managing beauty products, the system of managing beauty products comprising a recognition module (17), a display module (11), a processing module (10,30) and a weighing module (16), the method of automatically managing remaining capacities of beauty products comprising following steps:
a) controlling the processing module (10, 30) to recognize a beauty product (4) being used by a user via a recognition module (17) under a record mode;
b) weighing the beauty product (4) via a weighing module (16) when the user finishes using the beauty product (4) for obtaining a weight after usage of the beauty product (4);
c) recording usage of the beauty product (4) in this round and updating a remaining volume of the beauty product (4) according to the weight after usage; and
d) outputting a reminder of upcoming run out of beauty product via a display module (11) when determining that the remaining volume of the beauty product (4) is less than a default sufficient volume.

2. The method of automatically managing remaining capacities of beauty products according to claim 1, further comprising following steps:
e1) adding identification information of a new beauty product (4) to a beauty cabinet list under a management mode;
e2) retrieving an initial volume of the new beauty product (4) as a remaining volume of the new beauty product (4);
e3) setting a start date of using the new beauty product (4); and
e4) setting a default usage timing of the new beauty product (4).

3. The method of automatically managing remaining capacities of beauty products according to claim 2, further comprising a step e5) retrieving a recommended single time quantity of the new beauty product (4) from a beauty product database, and displaying the recommended single time quantity on the display module (11).

4. The method of automatically managing remaining capacities of beauty products according to claim 2, further comprising a step e6) analyzing historical usage record corresponding to the new beauty product (4) for obtaining a statistical single time quantity, and displaying the statistical single time quantity on the display module (11).

5. The method of automatically managing remaining capacities of beauty products according to claim 1, wherein the identification information (17) is an RFID reader (170), each of the beauty products (4) sets an RFID tag (40), and the step a) is performed to determine that the user uses the beauty product (4) when the RFID tag (40) of the beauty product (4) is inducted, receive input information from the RFID tag (40), and compare the input information with identification information of each of the beauty products (4) recorded in a beauty cabinet list of the user for recognizing the beauty product (4) used currently.

6. The method of automatically managing remaining capacities of beauty products according to claim 1, wherein the identification information (17) is a camera (171), and the step a) is performed to capture images continuously by the image capture module (12), determine that the user uses the beauty product (4) when determining according to the images that any of the beauty products (4) is placed on the weighing module (16), recognize an appearance input feature of the beauty product (4), and compare the appearance input feature with an appearance recognition feature of each of the beauty products (4) listed in a beauty cabinet list of the user for recognizing the beauty product (4).

7. The method of automatically managing remaining capacities of beauty products according to claim 1, wherein the recognition module (17) is a camera (171), and the step a) is performed to capture images continuously by the image capture module (12), determine that the user uses the beauty product (4) when determining according to the images that any of the beauty products (4) is placed on the weighing module (16), recognize a barcode image of the beauty product (4) in the images, generate input information according to the barcode image, and compare the input information with recognition information of each of the beauty products (4) listed in a beauty cabinet list of the user for recognizing the beauty product (4).

8. The method of automatically managing remaining capacities of beauty products according to claim 1, wherein the system of managing beauty products further comprises an input module (13), and the step a) is performed to switch to the record mode when a start beauty operation or a start beauty voice is received by the input module (13) or a start beauty gesture is captured by the image capture module (12).

9. The method of automatically managing remaining capacities of beauty products according to claim 1, wherein the step c) is performed to record a usage timing or a usage order of the new beauty product (4), compute a single time quantity of the beauty product (4), and record the single time quantity of the beauty product (4) for recording the usage of the beauty product (4) in this round .

10. The method of automatically managing remaining capacities of beauty products according to claim 9, wherein the step c) is performed to retrieve a weight before usage of the beauty product (4), and compute the single time quantity of the beauty product (4) according to the weight before usage and the weight after usage.

11. The method of automatically managing remaining capacities of beauty products according to claim 9, further comprising a step g) outputting a reminder of mistake in usage by the display module (11) when determining that the usage of the beauty product (4) does not conform with a default usage of the beauty product (4) under the record mode.

12. The method of automatically managing remaining capacities of beauty products according to claim 1, wherein the system of managing beauty products further comprises a beauty product management apparatus (1), the recognition module (17), the display module (11) and the processing module (10,30) are arranged in the beauty product management apparatus (1); the step a) to the step d) are performed by the beauty product management apparatus (1).

13. The method of automatically managing remaining capacities of beauty products according to claim 1, wherein the system of managing beauty products comprises a beauty product management apparatus (1), the beauty product management apparatus (1) comprises a mirror glass (18) and a case, the mirror glass (18) is used to appear an optical mirror image by reflection, the recognition module (17), the display module (11) and the processing module (10, 30) are arranged in the beauty product management apparatus (1), and the display module (11) is arranged in the case and rear of the mirror glass (18), a display surface of the display module (11) towards front of the mirror glass (18); the step a) to the step d) is performed by the beauty product management apparatus (1); the step d) is performed to appear the optical mirror image on the mirror glass (18) by reflection and display the reminder of upcoming run out of beauty product on the display module (11) for making the reminder of upcoming run out of beauty product appear on the mirror glass (18) by transmission.

14. The method of automatically managing remaining capacities of beauty products according to claim 1, wherein the system of managing beauty products comprises a beauty product management apparatus (1) and a cloud server (3), the beauty product management apparatus (1) comprises the recognition module (17), the display module (11) and a transmission module (14), the beauty product management apparatus (1) is connected to a network (2) by the transmission module (14) for connecting to the cloud server (3), and the processing module (10, 30) is arranged on the cloud server (3);
the step a) is performed to retrieve input information of the beauty product (4) by the recognition module (17), and transfer the input information to the cloud server (3) for recognizing identification information of the beauty product (4);
the step c) is performed to transfer the weight after usage of the beauty product (4) from the beauty product management apparatus (1) to the cloud server (3) for making the cloud server (3) record the usage of the beauty product (4) in this round, and updating the remaining volume of the beauty product (4);
the step d) is performed to transfer a reminder of upcoming run out of beauty product to the beauty product management apparatus (1) for making the beauty product management apparatus (1) output the reminder of upcoming run out of beauty product by the display module (11).
